Europäisches Patentamt

European Patent Office

Office européen des brevets

(11) Publication number: **0 150 926**
A2

# EUROPEAN PATENT APPLICATION

(21) Application number: 85300146.9

(22) Date of filing: 09.01.85

(51) Int. Cl.⁴: **G 07 C 9/00**, G 06 K 9/20

(30) Priority: 09.01.84 GB 8400391

(43) Date of publication of application: 07.08.85
Bulletin 85/32

(84) Designated Contracting States: CH DE FR GB IT LI SE

(71) Applicant: THE DE LA RUE COMPANY PLC, De La Rue
House 3/5 Burlington Gardens, GB-London W1A 1DL
(GB)

(72) Inventor: Etherington, Harry James Charles, "Talierna"
Grosvenor Road, Godalming Surrey GU7 1PA (GB)
Inventor: Joslin, Paul Carter, 39 The Oaks, Bracknell
Berks RG12 2XG (GB)

(74) Representative: Skone James, Robert Edmund et al,
GILL JENNINGS & EVERY 53-64 Chancery Lane, London
WC2A 1HN (GB)

(54) **Detecting fraudulent writing.**

(57) A method and apparatus for detecting the fraudulent writing of signs is descirbed. Radiation is caused to impinge on a writing medium (2) and radiation incident on, reflected from and/or transmitted through the writing medium (2) while the sign is being written is detected. The intensity of the detected radiation is monitored to detect the presence of a forgery aid.

THE DE LA RUE COMPANY PLC                    52/2178/02

<u>DETECTING FRAUDULENT WRITING</u>

The invention relates to methods and apparatus for detecting the fraudulent writing of signs, particularly signatures.

It is particularly important in the case of unattended cash dispensers/automatic teller mechanisms where a user is required to supply a signature that the signature supplied has been genuinely written on a writing medium by the user. There are many methods using artificial aids which can be used to produce a forged signature. For example tracing over a genuine signature and using a "carbon" (or equivalent) to transfer the tracing to the writing medium, tracing over an image of the genuine signature projected onto the writing medium, sticking onto the writing medium a copy of the genuine signature, the use of rubber stamps, and non-contact printing.

In accordance with one aspect of the present invention, a method of detecting the fraudulent writing of signs comprises causing radiation to impinge on a writing medium; detecting radiation incident on, reflected from and/or transmitted through the writing medium while the sign is being written; and monitoring the intensity of the detected radiation to detect the presence of a forgery aid.

With this method, if a forgery aid such as tracing paper is positioned on the writing medium, there will be a change in the intensity of the reflected or transmitted radiation indicating the presence of the tracing paper. It has been found that a significant change in intensity occurs in this situation.

In the case where an image of a genuine signature is projected onto the writing medium, there will be a change in the intensity of incident radiation and this also can be detected.

Ideally the step of causing radiation to impinge on the record medium comprises exposing the medium to ambient light such as sunlight or fluorescent light.

The radiation may however by monochromatic and may comprise radiation not normally visible to the naked eye such as infra-red radiation. This makes it more difficult for a potential forger to detect the presence of the radiation.

It should be understood that compensation will be made in processing electronics for changes in intensity due to movement of the writer's arm or writing instrument during writing of the sign. Conveniently, this may be assisted by causing a plurality of beams of radiation to impinge on the writing medium and/or by detecting radiation incident on, reflected from and/or transmitted through the writing medium at different positions across the writing medium. This enables a general change in the detected radiation due, for example, to the presence of an overlay to be distinguished from local obstruction produced by the user while writing the sign.

In accordance with a second aspect of the present invention, apparatus for detecting the fraudulent writing of signs comprises a writing medium arranged such that radiation impinges on the writing medium; detection means for detecting radiation incident on, reflected from and/or transmitted through the writing medium while the sign is being written; and a monitor for monitoring the intensity of the detected radiation to detect the presence of a forgery aid.

Preferably, the monitor includes means for comparing the intensity of the detected radiation with one or more predetermined expected values, the presence of a forgery aid being detected when the intensity of the detected radiation differs from an expected value.

Preferably, the apparatus includes means to compensate for changes in ambient light and changes in the transmission characteristics of the writing medium.

Conveniently, the detection means comprises a plurality of detectors arranged to receive radiation reflected from and/or transmitted through different portions of the writing medium.

The apparatus may further comprise a support for supporting the writing medium, the support having one or more apertures through which the radiation can pass, the detection means being positioned to detect radiation passing through the apertures.

When the radiation is not ambient radiation, the apparatus may further comprise a radiation source to cause radiation to impinge on the writing medium.

An example of signature verification apparatus incorporating apparatus for carrying out a method in accordance with the present invention will now be described with reference to the accompanying drawings, in which:-

Figure 1 is a schematic block diagram of the apparatus with some parts omitted for clarity;

Figure 2 is a partial plan of the pressure sensitive assembly shown in Figure 1:

Figure 3 is a cross-section through the pressure sensitive assembly shown in Figure 2; and,

Figure 4 is a flow diagram illustrating the steps carried out by a controlling microcomputer.

The apparatus comprises a feed roller 1 around which is wound a length of paper 2. The paper 2 is fed past a friction brake 3 and over a guide roller 4 to a writing station 5. The writing station 5 comprises a pressure sensitive pad or assembly 6 to be described in detail below. The paper 2 passes from the writing station 5 to a guide roller 7, past a drive capstan 8 and a guide roller 9 to a take up roller 10 around which the paper 2 is rolled.

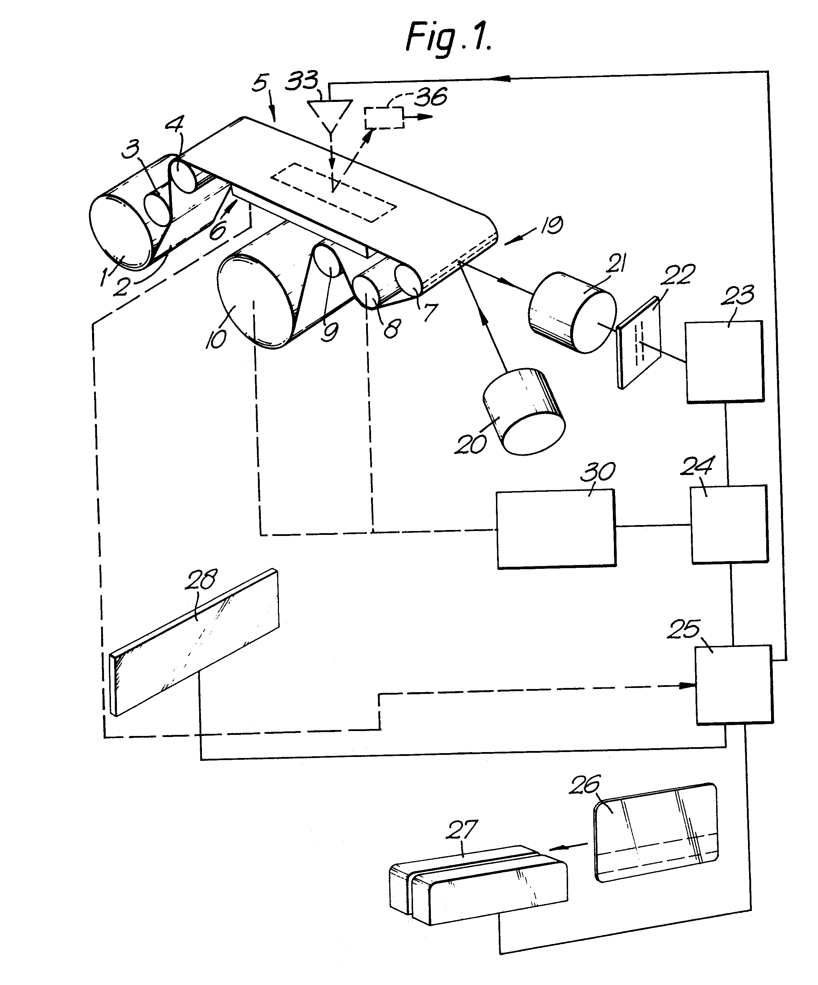

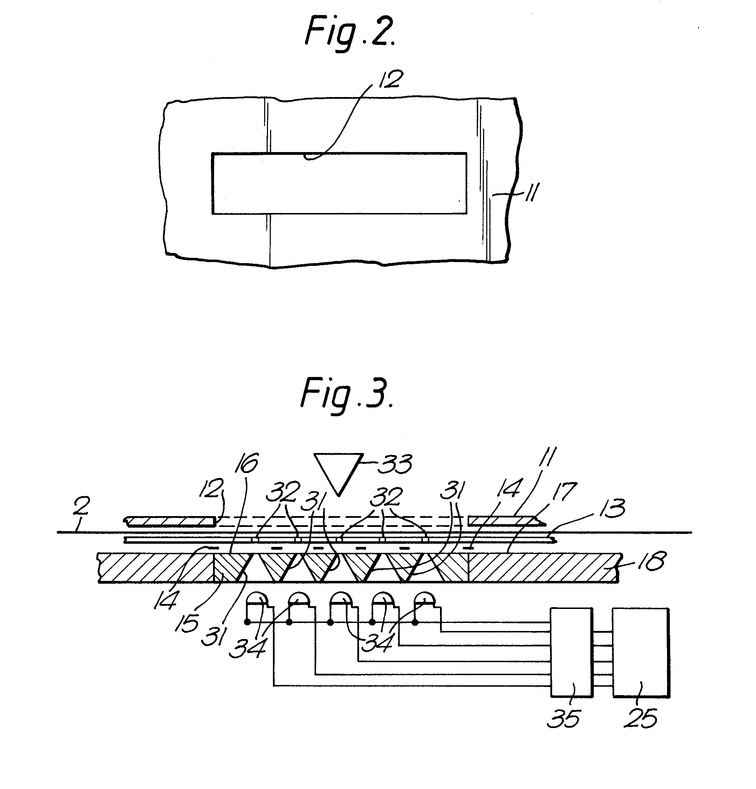

The writing station 5 is shown in more detail in Figures 2 and 3. A mask 11 in the form of a protective plate (not shown in Figure 1) is mounted above the paper 2 and defines a signing aperture 12 of rectangular form. A diaphragm 13 is mounted below the paper 2 and is spaced by a plurality of spacers 14 from a base 15. An upper surface 16 of the base 15 is flush with an upper face 17 of a supporting housing 18.

The apparatus described above will normally be housed in a secure housing (not shown) inaccessible to the user and conveniently the rollers 1, 4, 7, 8, 9 and 10, and the friction brake 3 will be mounted in a cartridge which can be slotted into the supporting housing.

The length of the paper 2 at the writing station 5 will be in a state of tension caused by the action of the brake 3 and the drive capstan 8. This assists in preventing tearing of the paper. The width of the paper 2 is at least twice that of the aperture 12. The roller 7 is positioned close to the right hand edge of the aperture 12, as seen in Figure 2, to minimise the length of paper between the signing aperture 12 and a static characteristic scanning station 19.

In use, a signatory will write his signature within the aperture 12 on the paper 2. The action of signing causes a transfer of writing pressure, through the paper 2, to the diaphragm 13 which deflects to make electrical contact with the base 15. The stiffness of the diaphragm 13, the amount of spacing between diaphragm 13 and the base 15, and the separation between spacers 14 are all determined to achieve a sensitive response during signing. When a signature has been completed, the drive capstan 8 and take-up roller 10 are activated to draw paper across the writing station 5 through the aperture between the mask 11 and the supporting housing 18 to move the section of the paper 2 on which a signature has been written to the static characteristic sensing station 19. This also brings a fresh, unmarked, section of paper 2 into the writing station 5. During movement of the paper 2, the paper is maintained in tension by means of the friction brake 3.

While the signature is moved through the station 19, it is illuminated by an illumination assembly 20 which illuminates a uniform strip of the paper 2, the illuminated strip being imaged via a scanning or optical system 21 onto a linear array of photo-sensitive elements 22 such as photoelectric diodes. The drive capstan 8 is actuated to cause the paper to be incremented through the station 19 at a constant velocity to assist the scanning step. The velocity is chosen so that, in one scan of the array 22, the paper 2 moves nominally one array element width.

The signals generated by the array 22 are fed to an analogue to digital converter 23 which digitises the analogue signal output by the array 22 by comparing this video signal with a reference level. The video signal from the array 22 is defined as "black" or "white" depending upon whether it is greater or less than this reference level. The reference level is related to the video signal in such a way that it tracks long term changes in the level of the video signal and it is insensitive to short term (rapid) changes. The digitised signal is fed to a control buffer 24 and from there to a conventional micro-computer 25 based on Z80 STD where it is stored and processed.

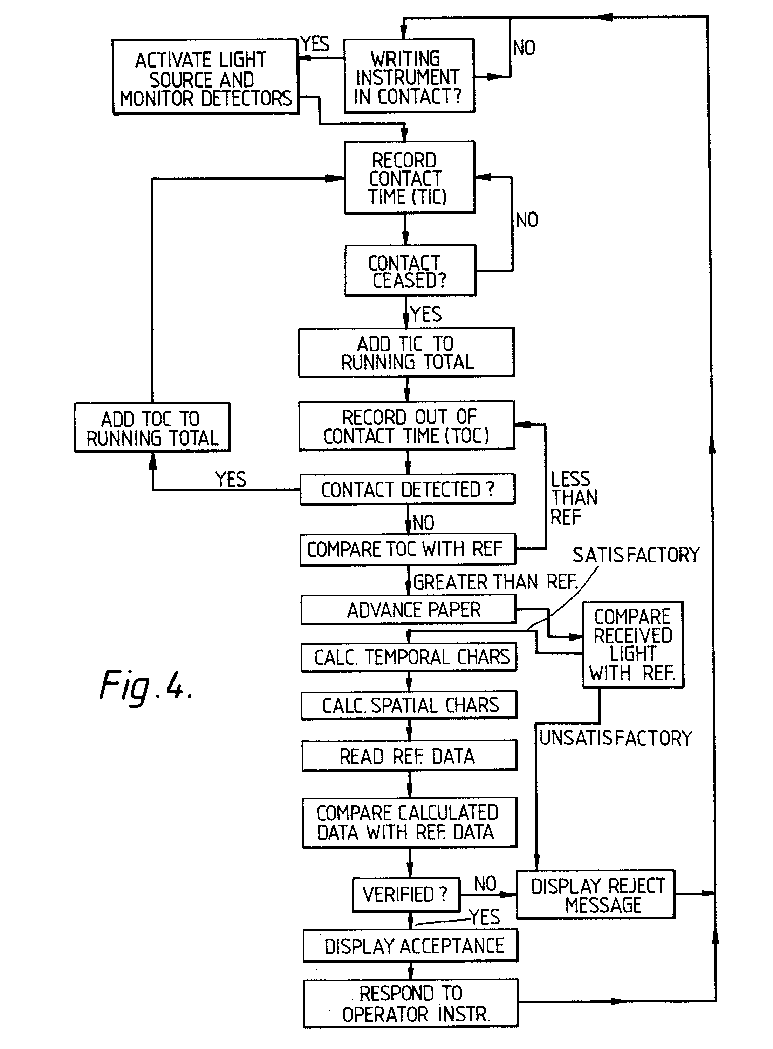

The microcomputer 25 controls the overall operation of the apparatus. The main steps of the computer program stored by the microcomputer 25 are illustrated in Figure 4.

The base 15 of the pressure sensitive pad 6 has a number of conical openings 31 which open into the upper surface of the base. Aligned openings 32 are provided in the diaphragm 13 and a light source 33 such as a light emitting diode (LED) is positioned above the aperture 12 in the mask 11.

As will be explained below, in use, when a signature is being written the light source 33 is activated to generate infra-red radiation which impinges on the portion of the paper 2 exposed through the aperture 12. A portion of that radiation will be transmitted through the paper 2, through the apertures 32 and the openings 31 and will be received by respective photo-electric detectors 34 positioned in alignment with the opening 31. The detectors 34 generate electrical signals whose values are representative of the intensity of the received radiation the electrical signals being fed to an analogue to digital converter 35 which provides digital signals to the microcomputer 25. The LED 33 is controlled by the microcomputer 25.

In addition, detectors 36 (shown in phantom in Figure 1) may be positioned on the same side of the paper 2 as the LED's 33. Output signals from these detectors may also be fed to an analogue to digital converter which provides digital signals to the microcomputer 25. These additional detectors 36 may detect reflected radiation or the intensity of incident radiation in order to detect the presence of a projected image.

The microcomputer continually senses for the initiation of contact between a writing instrument and the assembly 6 which is sufficient to depress the diaphragm 13 onto the base 15.

As soon as contact between the writing instrument and the assembly 6 has been detected, the microcomputer 25 activates the LED's 33 and monitors the signals from the detectors 34 as digitised by the converter 35. Electrical signals are then passed along an electrical circuit including a power source (not shown) from the base 15 to the microcomputer 25. The microcomputer determines the contact time (TIC) during which the writing instrument remains in contact with the assembly 6 and detects when the signals cease corresponding to the lifting of the writing instrument from the assembly. As soon as contact has ceased, the determined TIC is added to a TIC running total and the microcomputer starts to time the period for which the instrument is out of contact with the assembly 6 to generate an out of contact time (TOC). This out of contact time may correspond to a period within the signature or to the writing instrument being lifted from the assembly 6 when a signature has been completed. To distinguish between these situations the microcomputer senses for further contact occuring and if this is detected the TOC is added to a TOC running total and the steps for recording TIC are repeated. If no contact is detected the current TOC is compared with a reference which has a value such that if the TOC is greater than the reference this will mean that the signature has been completely written. Thus, if the TOC is less than the reference the TOC continues to be updated.

Once the microcomputer 25 determines that a complete signature has been written it causes a drive motor 30 to activate the drive capstan 8 and the take up roller 10 for a predetermined time period to draw the paper 2 across the assembly 6 and to bring the written signature into the static characteristic sensing station 19.

While the signature has been written, the microcomputer 25 has been comparing the output signals from the detectors 34 with those output signals it would expect if no forgery was being carried out. For example, if tracing paper was placed over the paper 2 this would attenuate the light intensity from the LED 33 being detected by the detectors 34 which in turn would generate low value signals to the microcomputer. The microcomputer 25 thus compares the signals from the detector 34 with suitable reference values and if the comparison is unsatisfactory suggesting that a forgery has taken place a suitable message will be displayed, the paper will stop and the apparatus will return to its initial situation with the light 33 deactivated.

Alternatively, if the result of the comparison is satisfactory then, the microcomputer determines one or more temporal characteristic measures. For example, these measures may comprise the total time for writing the signature which equals TIC + TOC and a measure equal to (TOC)/(TOC + TIC).

As the paper 2 is incremented through the station 19 the microcomputer 25 receives digital signals (as previously described) representing the signature and from which it determines certain static characteristic measures. Examples of static characteristic measures which may be determined are described in GB-A-2104698. In particular, the microcomputer 25 may determine the total chord length and the length and height 10%-90% of the signature. These latter two features are determined by constructing firstly two vertical lines outside which 10% of the signature lies at each end and then measuring the horizontal separation of the lines; and secondly by constructing two horizontal lines outside which 10% of the signature lies and measuring the vertical separation of these lines.

The microcomputer 25 next reads reference data from a magnetic card 26 belonging to the user which is positioned in a magnetic card reader 27 of conventional form. The information stored on the magnetic strip of the card 26 has been derived by obtaining a number, for example six, of genuine signatures, determining the dynamic and static characteristic measures which are to be compared later and determining the mean and standard deviation for each measure as determined from the six genuine signatures. The information stored on the card 26 is constituted by values related to these means and standard deviations.

The microcomputer 25 then compares the measures determined from the new signature with the information stored on the card in any conventional way such as by determining whether the measures fall within limits derived from the means and standard deviations and makes a decision dependent upon the similarity between the newly written signature and the previously written genuine signatures on whether the new signature is genuine. If the signature is verified as genuine the microcomputer 25 causes an appropriate message to be displayed on a monitor 28 visible by the user. The drive motor 30 will stop after the predetermined time period has expired. Thereafter, the microcomputer 25 responds to further instructions from the user or operator depending upon the context in which the apparatus is used. For example, if the apparatus is positioned in cash dispensing apparatus then the microcomputer 25 will allow a desired cash sum to be dispensed to the user. Alternatively, if the apparatus is used to allow access to be gained to a facility, such as a building, it will cause any locks provided to be unlocked.

The system then returns to the initial position at the beginning of the flow diagram shown in Figure 4.

In some situations, the microcomputer 25 can continually monitor signals from the detector 34 even when a signature is not being written in order to monitor the ambient light intensity and, if necessary, make adjustments to the reference intensity values.

The microcomputer 25 also compensates for the effect of a writing instrument or the signatories arm on the intensity of signals from the detectors 34 in a manner which will be readily apparent to a person skilled in the art.

## CLAIMS

1. A method of detecting the fraudulent writing of signs, the method comprising causing radiation to impinge on a writing medium (2); detecting radiation incident on, reflected from and/or transmitted through the writing medium (2) while the sign is being written; and monitoring the intensity of the detected radiation to detect the presence of a forgery aid.

2. A method according to claim 1, wherein the radiation is monochromatic.

3. A method according to claim 1 or claim 2, wherein the radiation is not normally visible to the naked eye.

4. A method according to any of the preceding claims, further comprising detecting radiation incident on, reflected from and/or transmitted through the writing medium at different positions across the writing medium.

5. A method according to claim 4, wherein a plurality of beams of radiation are caused to impinge on the writing medium (2).

6. Apparatus for detecting the fraudulent writing of signs, the apparatus comprising a writing medium (2) arranged such that radiation impinges on the writing medium; detection means (34) for detecting radiation incident on, reflected from and/or transmitted through the writing medium (2) while the sign is being written; and a monitor (25) for monitoring the intensity of the detected radiation to detect the presence of a forgery aid.

7. Apparatus according to claim 6, wherein the monitor (25) includes means for comparing the intensity of the detected radiation with one or more predetermined expected values, the presence of a forgery aid being detected in use when the intensity of the detected radiation differs from an expected value.

8.     Apparatus according to claim 6 or claim 7, wherein the detection means comprises a plurality of detectors (21) arranged to receive radiation reflected from and/or transmitted through different portions of the writing medium (2).

9.     Apparatus according to any of claims 6 to 8, the apparatus further comprising a support (6) for supporting the writing medium (2), the support having one or more apertures (31) through which the radiation can pass, the detection means being positioned to detect radiation passing through the apertures (31).

10.     Apparatus according to any of claims 6 to 9, further comprising a radiation source (33) to cause radiation to impinge on the writing medium (2).

# Fig.1.

*Fig.2.*

*Fig.3.*

Fig.4.